# FASCICULE DE BREVET EUROPEEN

(11) **EP 1 663 798 B1**
(45) Date de publication et mention de la délivrance du brevet: **08.08.2007**
(21) Numéro de dépôt: 04765227.6
(22) Date de dépôt: 15.09.2004
(51) Int. Cl.: B65D 25/10, B60S 1/38

(54) **DISPOSITIF D'EMBALLAGE POUR BALAI D' ESSUIE-GLACE A LAME COURBE ET STRUCTURE FLEXIBLE INTEGREE**
VERPACKUNGSVORRICHTUNG FÜR EINEN SCHEIBENWISCHER MIT EINEM GEKRÜMMTEN BLATT UND EINER INTEGRIERTEN FLEXIBLEN STRUKTUR
PACKAGING DEVICE FOR A WINDSCREEN WIPER COMPRISING A CURVED BLADE AND AN INTEGRATED FLEXIBLE STRUCTURE

(30) Priorité: 15.09.2003 FR 0310817
(43) Date de publication de la demande: 07.06.2006
(73) Titulaire: VALEO SYSTEMES D'ESSUYAGE, 78321 Le Mesnil Saint Denis (FR)
(72) Inventeur: CLAMAGIRAND, Catherine, F-63500 Issoire (FR); HOUSSAT, Stéphane, F-63118 Cebazat (FR)
(86) Numéro de dépôt international: PCT/EP2004/010313
(87) Numéro de publication internationale: WO 2005/026005

(56) Documents cités:
- DE-A- 2 326 093
- DE-A- 19 951 971
- GB-A- 2 190 066
- US-A- 5 899 334

## Description

La présente invention concerne un dispositif d'emballage destiné au conditionnement d'un balai d'essuie-glace doté d'une lame courbe à structure flexible intégrée selon le préamble de la revendication 1. Un tel dispositif est décrit dans le document DE-A-19951971.

L'invention trouve une application particulièrement avantageuse, mais non exclusive, dans le domaine des pièces de rechange pour véhicule automobile.

Il existe aujourd'hui une nouvelle génération de balais d'essuie-glace dont la particularité est d'être dépourvues de structures à palonniers, contrairement aux balais droits communément employés à l'heure actuelle. Ce nouveau type de balai dispose toujours d'une lame racleuse souple, mais l'armature externe chargée de la supporter est ici remplacée par une structure flexible qui est directement intégrée à la lame. L'ensemble est agencé de manière à ce qu'au repos, la lame présente longitudinalement une forme concave dans son plan de sagittal, mais qu'au contact d'une surface à essuyer, ladite lame soit en mesure de se redresser par déformation élastique de sa structure flexible afin d'épouser au mieux ladite surface tout au long de son déplacement.

Du fait précisément de sa forme incurvée, un balai d'essuie-glace à lame courbe présente au repos un encombrement bien supérieur à son homologue à structure à palonniers et lame droite. Son conditionnement s'avère par conséquent beaucoup plus problématique dans la mesure où il n'est pas concevable d'utiliser un simple blister de forme complémentaire. Le volume de l'emballage se doit en effet d'être relativement réduit pour des raisons essentiellement de coûts de fabrication, de protection de l'environnement et de logistique.

Pour remédier à cette difficulté, il est connu d'utiliser un conditionnement doté de moyens de maintien à même d'immobiliser le balai à l'intérieur d'un logement, dans une position au moins partiellement redressée par rapport à sa position de repos.

La demande internationale WO 01/30619 décrit notamment un dispositif d'emballage qui se présente sous la forme d'une coque à l'intérieur de laquelle sont ménagées longitudinalement deux rainures rectilignes en regard l'une de l'autre. L'ensemble est agencé de manière à ce que chaque rainure soit en mesure de s'emboîter avec une partie saillante s'étendant le long de la face correspondante du balai, et notamment avec une des languettes élastiquement déformable composant la structure flexible.

Ce document décrit également une variante sensiblement équivalente. En effet, à l'inverse du mode de réalisation précédemment évoqué, la coque est cette fois dotée de deux rebords internes, rigides et linéaires. Ménagés en vis-à-vis, ils sont à même de s'emboîter dans des rainures s'étendant longitudinalement de part et d'autre du talon de la lame, et notamment dans les rainures existantes qui sont destinées à procurer à la lame la souplesse nécessaire à son retournement.

Ce type de dispositif d'emballage présente toutefois l'inconvénient d'être particulièrement peu pratique à employer. La mise en place du balai à l'intérieur du logement s'avère en effet très compliquée à l'usage, puisqu'il est nécessaire de redresser précisément ledit balai pour pouvoir réaliser le double emboîtement avec la coque, qui plus est sur toute la longueur de chacune des faces dudit balai. Par ailleurs, un tel dispositif d'emballage ne permet pas de mettre suffisamment en valeur le balai d'essuieglace, dans la mesure où chacune de ses faces demeure partiellement masquée par les moyens de maintien une fois ledit balai en place.

Aussi le problème technique à résoudre, par l'objet de la présente invention, est de proposer un dispositif d'emballage pour un balai d'essuie-glace à lame courbe et structure flexible intégrée, ledit dispositif d'emballage comportant un logement destiné à recevoir le balai, ainsi que des moyens de maintien chargés d'immobiliser ledit balai à l'intérieur dudit logement dans une position pouvant être au moins partiellement redressée par rapport à sa position de repos, dispositif d'emballage qui permettrait d'éviter les problèmes de l'état de la technique en proposant notamment une facilité d'utilisation sensiblement améliorée, tout en offrant une meilleure valorisation du produit.

La solution au problème technique posé consiste, selon la présente invention, en ce que les moyens de maintien comportent une première surface d'appui apte à coopérer par contact avec une portion de la partie supérieure du balai, une seconde surface d'appui apte à coopérer par contact avec une première portion de la partie inférieure dudit balai, et une troisième surface d'appui apte à coopérer par contact avec une seconde portion de ladite partie inférieure du balai, la première surface d'appui s'étendant en regard d'une zone située entre la seconde surface d'appui et la troisième surface d'appui.

L'invention telle qu'ainsi définie présente l'avantage d'être extrêmement commode à employer. Le fait que les moyens de maintien du dispositif d'emballage soient destinées à coopérer avec des parties de balai véritablement externes et opposées dans le plan sagittal, implique que les surfaces d'appui correspondantes soient positionnées sensiblement en vis-à-vis et à distance les unes des autres, les rendant par conséquent particulièrement accessibles.

Pour être mis en place, le balai doit simplement être redressé dans son plan sagittal sans qu'il soit nécessaire de lui conférer une courbure particulière, contrairement à l'art antérieur. Une fois positionné entre les moyens de maintien, le balai est relâché jusqu'à ce que sa partie supérieure et sa partie inférieur rentre en contact avec les surfaces d'appui correspondantes. La force de rappel élastique, engendrée par la mise en tension de la structure flexible entre les différentes surfaces d'appui, assure alors l'immobilisation du balai d'essuie-glace au sein du logement.

Par ailleurs, le fait que le maintien soit réalisé au niveau des extrémités respectivement supérieure et inférieure du balai, permet de libérer l'espace situé sur les côtés dudit balai. Sous réserve bien entendu que la paroi correspondante de l'emballage soit perméable à la lumière, il est ainsi possible de montrer quasi intégralement au moins l'une des faces du balai. Cela permet de mettre en avant la forme et/ou la structure particulière du balai. Cette caractéristique esthétique constitue un avantage décisif d'un point de vue marketing.

Il est à noter que la surface de contact effective entre chaque surface d'appui et la portion correspondante du balai n'est pas forcément continue, mais qu'elle peut être constituée de plusieurs points de contact de tailles variables, plus ou moins régulièrement espacés.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée, en référence aux dessins annexés sur lesquels:
La figure 1 illustre schématiquement un exemple de balai d'essuie-glace susceptible d'être conditionné dans un dispositif d'emballage conforme à l'invention.
La figure 2 est une vue en coupe transversale centrale du balai d'essuie-glace de la figure 1.
La figure 3 représente un dispositif d'emballage conforme à l'invention.
La figure 4 montre le positionnement du balai d'essuie-glace des figures 1 et 2 à l'intérieur du logement du dispositif d'emballage de la figure 3.
La figure 5 constitue une vue en coupe transversal de l'ensemble de la figure 4, réalisée au niveau du centre du balai d'essuie-glace.
La figure 6 correspond également à une vue en coupe transversal de l'ensemble de la figure 4, mais réalisée cette fois au niveau de l'une des zones de contact du balai d'essuie-glace.
La figure 7 illustre une première portion de la partie centrale du dispositif d'emballage de la figure 3, portion dans laquelle sont visibles des moyens de retenue.
La figure 8 représente une seconde portion de la partie centrale du dispositif d'emballage de la figure 3, portion dans laquelle sont visibles des moyens de centrage.
La figure 9 montre une extrémité du logement ménagé au centre du dispositif d'emballage de la figure 3.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

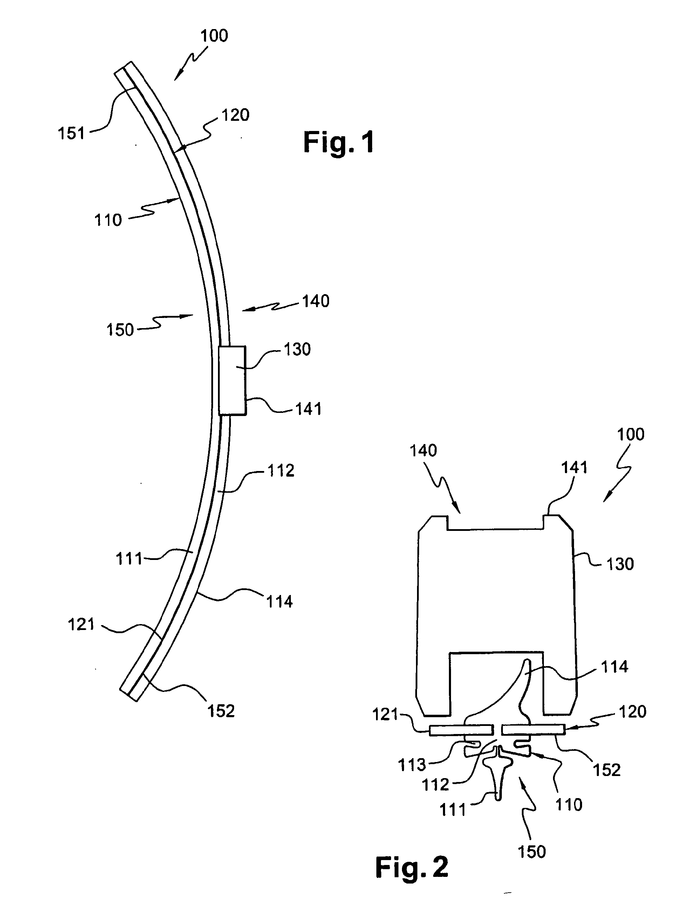

La figure 1 illustre de manière schématique un balai d'essuie-glace 100 à lame courbe 110 et structure flexible intégrée 120, qui est plus particulièrement destiné à équiper un véhicule automobile. Il est à noter que ce domaine, un tel élément d'essuyage est souvent appelé balai plat en raison de sa faible hauteur ; caractéristique qui résulte précisément de l'absence d'armature à palonniers. Quoi qu'il en soit, sur cette représentation en position repos, on remarque bien la forme incurvée de la lame 110 qui est imposée par le profil courbé de la structure flexible 120.

Ainsi qu'on peut le voir plus clairement sur la figure 2, la lame 110 du balai 100 se compose classiquement d'une lèvre 111 destinée à coopérer directement par contact glissant avec une surface à essuyer, ainsi que d'un talon 112 formant interface entre ladite lèvre 111 et la structure flexible 120. De par leurs fonctions respectives, la lèvre 111 est particulièrement dure et résistante à l'usure, tandis que le talon 112 offre la souplesse nécessaire au retournement optimal de la lame 110 lors des inversion de sens de balayage. Il est à noter que cette souplesse résulte ici avant tout du découpage particulier du talon 112 de la lame 110, et notamment de la présence de rainures longitudinales 113.

On remarque également la présence d'un spoiler 114 qui fait tout aussi classiquement partie intégrante de la partie supérieure du talon 112. La lame 110 est en fait constituée d'un profil en élastomère qui regroupe en un ensemble monobloc, à la fois la lèvre 111, le talon 112 et le spoiler 114.

La structure flexible 120 est quant à elle constituée dans cet exemple de réalisation par deux languettes élastiquement déformables 121 qui sont intégrées longitudinalement, respectivement au niveau de chaque face de la lame 110. Chaque languette 121, appelée communément vertèbre, est chargée de répartir la pression d'appui de façon homogène sur toute la longueur de la lame 110 dans le but d'optimiser la qualité d'essuyage. Elles sont métalliques dans cet exemple de réalisation.

On distingue en outre la présence d'un élément de liaison 130 qui est là encore classiquement destiné à permettre le montage du balai 100 sur un mécanisme d'entraînement. Afin de pouvoir remplir sa fonction, l'élément de liaison 130 est solidarisé à la partie supérieure 140 du balai 100 et il présente une structure aptes à coopérer par assemblage avec les moyens de liaison complémentaires, ménagés à l'extrémité du bras d'actionnement du mécanisme d'entraînement associé.

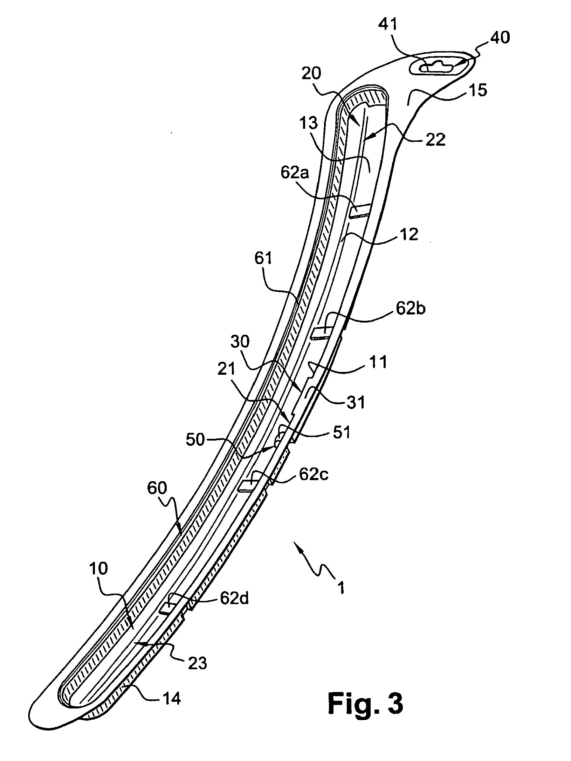

La figure 3 représente un dispositif d'emballage 1 destiné à servir de conditionnement au balai d'essuie-glace 100 précédemment décrit. Dans ce mode particulier de réalisation, choisi uniquement à titre d'exemple, le dispositif d'emballage 1 est ainsi doté d'un logement 10 destiné à recevoir le balai 100, ainsi que de moyens de maintien 20 chargés d'immobiliser ledit balai 100 à l'intérieur dudit logement 10 dans une position partiellement redressée par rapport à sa position de repos.

Conformément à l'objet de la présente invention, les moyens de maintien 20 comportent tout d'abord une première surface d'appui 21 qui est en mesure de coopérer par contact avec une portion 141 de la partie supérieure 140 du balai 100. Les moyens de maintien 20 sont en outre pourvus d'une seconde surface d'appui 22 qui est à même de coopérer par contact avec une première portion 151 de la partie inférieure 150 du balai 100. Les moyens de maintien 20 sont enfin dotés d'une troisième surface d'appui 23 qui est apte à coopérer par contact avec une seconde portion 152 de la partie inférieure 150 du balai 100. L'ensemble est ménagé de manière à ce que la première surface d'appui 21 s'étende en regard d'une zone située entre la seconde surface d'appui 22 et la troisième surface d'appui 23. Les trois surfaces d'appui 21, 22, 23 sont ainsi positionnées en triangle à distance les unes des autres, ce qui permet de réaliser efficacement un maintien en trois points.

De manière particulièrement avantageuse, les trois surfaces d'appui 21, 22, 23 sont ménagés de façon à ce que la première surface d'appui 21 soit en mesure de coopérer par contact avec une portion 141 sensiblement centrale de la partie supérieure 140 du balai 100, et de façon à ce que la seconde surface d'appui 22 et la troisième surface d'appui 23 soient respectivement à même de coopérer par contact avec des portions 151, 152 généralement extrémales de la partie inférieure 150 dudit balai 100.

Conformément à une autre caractéristique avantageuse de l'invention, la première surface d'appui 21 est ménagée sensiblement à égale distance de la seconde surface d'appui 22 et de la troisième surface d'appui 23. Cette spécificité permet une répartition homogène des forces de pression qui sont engendrées par la déformation élastique de la structure flexible 120 et qui sont à l'origine du maintien du balai 100 à l'intérieur du logement 10.

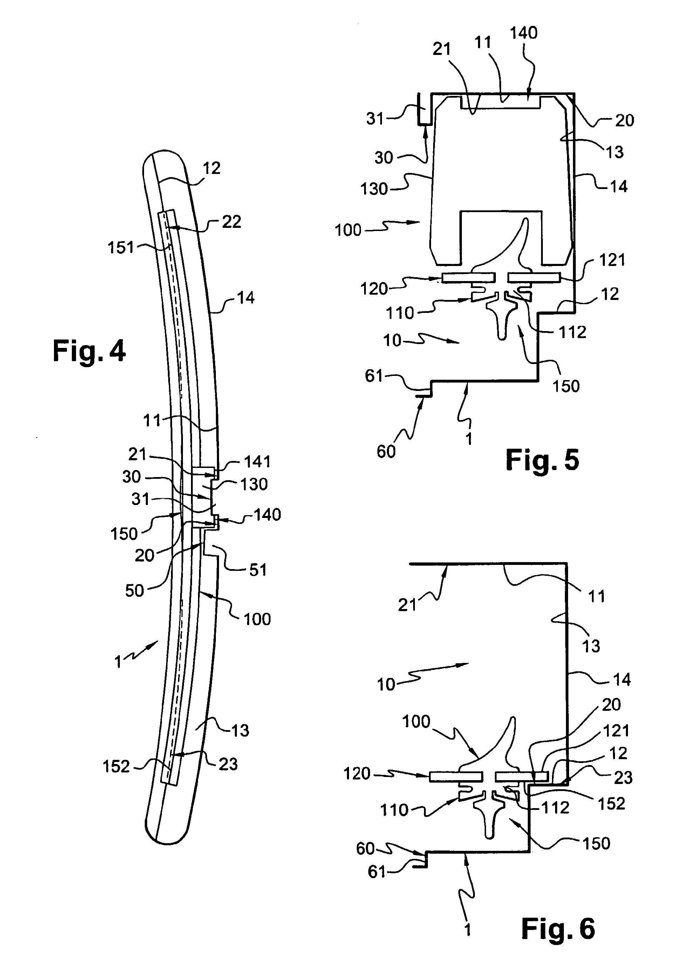

Selon une particularité de l'invention visible sur la figure 4, la première surface d'appui 21 est constituée par une portion de paroi 11 délimitant latéralement le logement 10.

Dans cet exemple de réalisation, le balai 100 comporte un élément de liaison 130 positionné à sa partie supérieure 140, de sorte qu'il est avantageux que la première surface d'appui 21 soit en mesure de coopérer par contact avec l'élément de liaison 130 en question.

Selon une autre particularité de l'invention, la seconde surface d'appui 22 et la troisième surface d'appui 23 sont constituées par des portions d'un même rebord 12 ménagé longitudinalement au fond du logement 10.

De préférence, la seconde surface d'appui 22 et la troisième surface d'appui 23 sont ménagées de manière à être à même de coopérer par contact avec le talon 112 de la lame 110. Le but est d'éviter tout contact entre le dispositif d'emballage 1 et la lèvre 111, afin de préserver l'intégrité de cette dernière.

S'il est important que les contacts en question se fassent au niveau de parties de la lame 110 qui sont adjacentes à la lèvre 111, il est plus particulièrement avantageux que la seconde surface d'appui 22 et la troisième surface d'appui 23 soient en mesure de coopérer par contact avec la structure flexible 120 qui est intégrée au talon 112 de la lame 110 (figure 6). En effet, chaque languette métallique 121 de cet exemple de réalisation présente une dureté bien supérieure à celle de l'élastomère constituant la lame 110, de sorte qu'elle constitue une surface de contact considérablement plus stable, d'où un meilleur maintien. Cette caractéristique permet en outre de préserver l'intégrité de la lame souple 110, qui est par nature beaucoup plus fragile que la structure flexible 120.

Selon une autre particularité de l'invention, le dispositif d'emballage 1 est doté de moyens de retenue 30 qui sont aptes à bloquer au moins une partie du balai 100 à l'intérieur du logement 10, suivant une direction sensiblement perpendiculaire au plan sagittal dudit balai 100.

De manière particulièrement avantageuse, les moyens de retenue 30 sont en mesure de plaquer au moins une partie du balai 100 contre le fond 13 du logement 10. Cette caractéristique permet de limiter le jeu latéral du balai 100 lorsqu'il est à l'intérieur du logement 10.

Les figures 5 et 6 illustrent en détail le maintien du balai 100 dans le logement 10 aux niveau des différents points de contact.

La figure 5 s'intéresse plus particulièrement au positionnement relatif en partie centrale. Elle montre notamment le blocage réalisé entre la paroi latérale 11 délimitant le logement 10 et la partie supérieure 140 du balai 100, matérialisée par l'élément de liaison 130. La partie inférieure 150 du balai 100 ne subit quant à elle aucune contrainte à cet endroit précis.

On remarque également l'action des moyens de retenue 30 qui participe au maintien à plat du balai 100 contre le fond 13 du logement 10. Dans ce mode particulier de réalisation, les moyens de retenue 30 comportent une butée 31 qui est ménagée à l'aplomb du logement 10 et qui est à même de coopérer par contact avec une portion de face latérale du balai 100, en l'occurrence l'élément de liaison 130. Il est à noter que si la butée 31 doit être ménagée au niveau de l'ouverture du logement 10 pour pouvoir remplir sa fonction, son positionnement en hauteur par rapport au fond 13 n'est fonction que de l'épaisseur de la partie supérieure 140 du balai 100, indépendamment de la profondeur dudit logement 10.

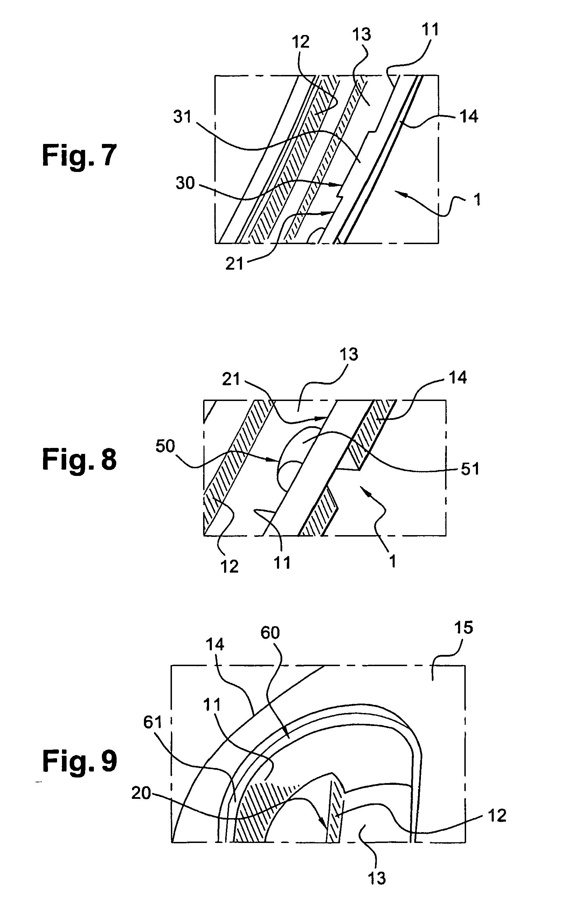

Sur la représentation agrandie de la figure 7, on voit bien que dans cet exemple de réalisation, la butée 31 se présente plus précisément sous la forme d'un rebord longitudinal, formant retour, qui s'étend parallèlement au fond 13 du logement 10.

La figure 6 montre quant à elle le positionnement de chaque extrémité du balai 100 dans le logement 10. On note que dans cette zone, seule la partie inférieure 150 du balai 100 est en contact avec le dispositif d'emballage 1. En l'occurrence, et comme cela a déjà été expliqué précédemment, c'est l'une des languettes 121 de la structure flexible 120 qui coopère par contact avec le rebord 12 ménagé longitudinalement au fond du logement 10.

Ainsi qu'on peut le voir sur la figure 3, le dispositif d'emballage 1 est doté par ailleurs de moyens d'accrochage 40 qui sont aptes à permettre sa suspension dans une position correspondant à un positionnement sensiblement vertical du balai 100. Dans cet exemple de réalisation, les moyens d'accrochage 40 sont constitués par un classique trou traversant 41 qui est conformé de manière à pouvoir coopérer avec un crochet de fixation d'un quelconque présentoir.

Selon une autre particularité de l'invention, visible aux figures 3 et 4, le dispositif d'emballage 1 est en outre pourvu de moyens de centrage 50 qui sont en mesure de bloquer longitudinalement le balai 100 à l'intérieur du logement 10, au moins dans un sens et sensiblement au centre dudit logement 10.

Dans le cas où le blocage longitudinal ne serait pas total, c'est-à-dire qu'il ne serait effectif que dans un sens, il est particulièrement avantageux que les moyens de centrage 50 soient à même de bloquer le balai 100 au centre du logement 10 lorsque le dispositif d'emballage 1 est suspendu de manière sensiblement verticale, par l'intermédiaire de ses moyens d'accrochage 40.

Lorsque le balai 100 comporte un élément de liaison 130 à sa partie supérieure 140 comme dans notre mode particulier de réalisation, il est également particulièrement avantageux que les moyens de centrage 50 soient constitués par une butée 51 apte à coopérer par contact avec ledit élément de liaison 130.

Sur l'agrandissement de la figure 8, on voit bien que dans cet exemple de réalisation, la butée 51 se présente plus précisément sous la forme d'un plot ménagé transversalement dans le logement 10. En d'autres termes, le plot en question s'étend perpendiculairement à la fois par rapport à la paroi latérale 11 et par rapport au fond 13.

Il est à noter que ce type de configuration s'avère extrêmement intéressante d'un point de vue industriel, car elle facilite le travail de l'opérateur qui est chargé du conditionnement. En effet, la mise en place du balai 100 à l'intérieur du logement 10 n'a pas à se faire de manière unidirectionnelle, mais elle peut s'effectuer indifféremment suivant une pluralité d'angles d'approche bien différents. Plus simplement, l'opérateur n'a à prendre en compte qu'une seule butée de centrage et non deux, de sorte qu'il est considérablement moins gêné pour réalisé sa tâche de remplissage.

L'intérêt des moyens de centrage 50 est de positionner systématiquement le balai 100 au centre du logement 10, quelle que soit la longueur et donc le poids dudit balai 100. Il est ainsi possible de conditionner des balais 100 de tailles différentes dans un même type de dispositif d'emballage 1, sans pour autant modifier la position du centre de gravité de l'ensemble. Cette caractéristique permet avantageusement d'obtenir des alignements réguliers lorsque plusieurs dispositifs d'emballages 1 sont suspendus, même si les balais qu'ils contiennent sont de tailles différentes. La mise en valeur du produit s'en trouve par conséquent améliorée dans des proportions significatives.

Conformément à une autre caractéristique de l'invention, le logement 10 est ici délimité par une coque 14 sensiblement rigide. Il s'agit d'une sorte d'enveloppe de faible épaisseur, qui offre toutefois une tenue mécanique compatible avec sa fonction d'emballage de protection.

De manière particulièrement avantageuse, la coque 14 est perméable à la lumière, c'est-à-dire transparente ou translucide. Cette caractéristique permet de garder le balai 100 visible lorsqu'il est conditionné dans le dispositif d'emballage 1 selon l'invention. Il apparaît en effet primordial de mettre en avant le particularisme esthétique de ce type de balai 100 à lame courbe 110 et structure flexible 120 intégrée, notamment par rapport aux balais droits communément utilisés.

Dans cet exemple de réalisation, la coque 14 est ainsi réalisée en matière plastique, en l'occurrence du PET amorphe transparent, et elle présente une épaisseur de l'ordre de 500µm.

D'un point de vue marketing, il s'avère également préférable de présenter le balai 100 dans une position seulement partiellement redressé, afin de mettre en évidence la courbure de sa lame 110. Car outre son esthétique intrinsèque, la forme du balai 100 constitue une caractéristique distinctive essentielle pour se différencier des classiques balais droits.

Selon une autre particularité de l'invention, le dispositif d'emballage 1 comporte des moyens de renfort 60 qui sont en mesure de rigidifier la coque 14. Le but est d'empêcher la coque 14 de vriller lorsque cette dernière est soumise aux forces de pression engendrées par la déformation élastique de la structure flexible 120 du balai 100.

Dans ce mode particulier de réalisation, les moyens de renfort 60 sont tout d'abord dotés d'un épaulement 61 qui est ménagé à la périphérie de l'ouverture du logement 10 et qui s'étend de manière sensiblement perpendiculaire à la paroi latérale 11 de la coque 14 (figure 9). Il est à noter que l'épaulement 61 peut s'étendre de manière continue ou pas, et de façon plus ou moins régulière.

Les moyens de renfort 60 sont en outre pourvus de quatre nervures 62a, 62b, 62c, 62d qui sont ménagées transversalement au fond de la coque 14. De part la nature de la coque 14, chaque nervure transversale 62a, 62b, 62c, 62d se présente ici sous la forme d'une nervure creuse, mais bien entendu des nervures pleines de dimensions adaptées pourraient très bien être utilisées.

Selon une autre particularité de l'invention, le dispositif d'emballage 1 comporte un élément de fermeture qui est apte à obturer l'ouverture du logement 10. Non représenté ici pour des raisons de clarté, l'élément de fermeture n'en dispose pas moins d'une forme sensiblement identique à la plage de solidarisation 15 qui s'étend perpendiculairement à l'ouverture du logement 10 et qui fait ici partie intégrante de la coque 14. L'élément de fermeture peut aussi avoir toute forme compatible avec la longueur du balai 100. Il peut par ailleurs être solidarisé à la plage 15 par toute technique de fixation connue, et notamment par collage, soudage, agrafage, encliquetage, etc. L'élément de fermeture peut par ailleurs être réalisé en tout type de matériau, et notamment en carton afin de pouvoir servir avantageusement de support d'informations.

Il est à noter que l'élément de fermeture, tout comme le rebord interne 12 d'ailleurs, participent également à la rigidification de la coque 14 au même titre que les moyens de renfort 60.

## Revendications

1. Dispositif d'emballage (1) pour un balai d'essuie-glace (100) à lame courbe (110) et structure flexible (120) intégrée, ledit dispositif d'emballage (1) comportant un logement (10) destiné à recevoir le balai (100), ainsi que des moyens de maintien (20) chargés d'immobiliser ledit balai (100) à l'intérieur dudit logement (10) dans une position pouvant être au moins partiellement redressée par rapport à sa position de repos, **caractérisé en ce que** les moyens de maintien (20) comportent une première surface d'appui (21) apte à coopérer par contact avec une portion (141) de la partie supérieure (140) du balai (100), une seconde surface d'appui (22) apte à coopérer par contact avec une première portion (151) de la partie inférieure (150) dudit balai (100), et une troisième surface d'appui (23) apte à coopérer par contact avec une seconde portion (152) de ladite partie inférieure (150) du balai (100), la première surface d'appui (21) s'étendant en regard d'une zone située entre la seconde surface d'appui (22) et la troisième surface d'appui (23).

2. Dispositif d'emballage (1) selon la revendication 1, **caractérisé en ce que** la première surface d'appui (21) est apte à coopérer par contact avec une portion (141) sensiblement centrale de la partie supérieure (140) du balai (100), et **en ce que** la seconde surface d'appui (22) et la troisième surface d'appui (23) sont respectivement aptes à coopérer par contact avec des portions (151, 152) sensiblement extrémales de la partie inférieure (150) dudit balai (100).

3. Dispositif d'emballage (1) selon l'une des revendications 1 ou 2, **caractérisé en ce que** la première surface d'appui (21) est ménagée sensiblement à égale distance de la seconde surface d'appui (22) et de la troisième surface d'appui (23).

4. Dispositif d'emballage .(1) selon l'une quelconque des revendications 1 à 3, **caractérisé en ce que** la première surface d'appui (21) est constituée par une portion de paroi (11) délimitant latéralement le logement (10).

5. Dispositif d'emballage (1) selon l'une quelconque des revendications 1 à 4, **caractérisé en ce que** le balai (100) comporte à sa partie supérieure (140) un élément de liaison (130) destiné à permettre son montage sur un mécanisme d'entraînement, et **en ce que** la première surface d'appui (21) est apte à coopérer par contact avec ledit élément de liaison (130).

6. Dispositif d'emballage (1) selon l'une quelconque des revendications 1 à 5, **caractérisé en ce que** la seconde surface d'appui (22) et la troisième surface d'appui (23) sont constituées par des portions d'un même rebord (12) ménagé longitudinalement au fond du logement (10).

7. Dispositif d'emballage (1) selon l'une quelconque des revendications 1 à 6, **caractérisé en ce que** la seconde surface d'appui (22) et la troisième surface d'appui (23) sont aptes à coopérer par contact avec le talon (112) de la lame (110).

8. Dispositif d'emballage (1) selon l'une quelconque des revendications 1 à 7, **caractérisé en ce que** la seconde surface d'appui (22) et la troisième surface d'appui (23) sont chacune aptes à coopérer par contact avec la structure flexible (120) intégrée au talon (112) de la lame (110) .

9. Dispositif d'emballage (1) selon l'une quelconque des revendications 1 à 8, **caractérisé en ce qu'**il comporte des moyens de retenue (30) aptes à bloquer au moins une partie du balai (100) à l'intérieur du logement (10), suivant une direction sensiblement perpendiculaire au plan sagittal dudit balai (100).

10. Dispositif d'emballage (1) selon la revendication 9, **caractérisé en ce que** les moyens de retenue (30) sont aptes à plaquer au moins une partie du balai (100) contre le fond (13) du logement (10).

11. Dispositif d'emballage (1) selon l'une des revendications 9 ou 10, **caractérisé en ce que** les moyens de retenue (30) comportent une butée (31) qui est ménagée à l'aplomb du logement (10) et qui est apte à coopérer par contact avec une portion de face latérale du balai (100).

12. Dispositif d'emballage (1) selon l'une quelconque des revendications 1 à 11, **caractérisé en ce qu'**il comporte des moyens d'accrochage (40) aptes à permettre sa suspension dans une position correspondant à un positionnement sensiblement vertical du balai (100).

13. Dispositif d'emballage (1) selon l'une quelconque des revendications 1 à 12, **caractérisé en ce qu'**il comporte des moyens de centrage (50) aptes à bloquer le balai (100), longitudinalement et au moins dans un sens, sensiblement au centre du logement (10).

14. Dispositif d'emballage (1) selon la revendication 13, **caractérisé en ce que** les moyens de centrage (50) sont aptes à bloquer le balai (100) sensiblement au centre du logement (10) lorsque ledit dispositif d'emballage (1) est suspendu de manière sensiblement verticale par l'intermédiaire ses moyens d'accrochage (40).

15. Dispositif d'emballage (1) selon l'une des revendications 13 ou 14, **caractérisé en ce que** le balai (100) comporte à sa partie supérieure (140) un élément de liaison (130) destiné à permettre son montage sur un mécanisme d'entraînement, et **en ce que** les moyens de centrage (50) comportent une butée (51) apte à coopérer par contact avec ledit élément de liaison (130).

16. Dispositif d'emballage (1) selon l'une quelconque des revendications 1 à 15, **caractérisé en ce que** le logement (10) est délimité par une coque (14) sensiblement rigide.

17. Dispositif d'emballage (1) selon la revendication 16, **caractérisé en ce que** la coque (14) est perméable à la lumière.

18. Dispositif d'emballage (1) selon l'une quelconque des revendications 1 à 17, **caractérisé en ce qu'**il comporte des moyens dè renfort (60) aptes à rigidifier la coque (14).

19. Dispositif d'emballage (1) selon la revendication 18, **caractérisé en ce que** les moyens de renfort (60) comportent un épaulement (61) qui est ménagé à la périphérie de l'ouverture du logement (10) et qui s'étend de manière sensiblement perpendiculaire à la paroi latérale (11) de la coque (14).

20. Dispositif d'emballage (1) selon l'une des revendications 18 ou 19, **caractérisé en ce que** les moyens de renfort (60) comportent au moins une nervure (62a, 62b, 62c, 62d) ménagée transversalement au fond de la coque (14).

21. Dispositif d'emballage (1) selon l'une quelconque des revendications 1 à 20, **caractérisé en ce qu'**il comporte un élément de fermeture apte à obturer l'ouverture du logement (10).

## Claims

1. Packaging system (1) for a windscreen-wiper blade (100) with a curved wiping strip (110) and an integrated flexible structure (120), said packaging system (1) comprising a housing (10) designed to accommodate the blade (100), as well as support means (20) responsible for immobilising said blade (100) inside said housing (10) in a position which can be at least partially straightened in relation to its resting position, **characterised in that** the support means (20) comprise a first support surface (21) capable of cooperating by contact with a portion (141) of the top (140) of the blade (100), a second support surface (22) capable of cooperating by contact with a first portion (151) of the bottom (150) of said blade (100), and a third support surface (23) capable of cooperating by contact with a second portion (152) of said bottom (150) of the blade (100), the first support surface (21) extending opposite an area located between the second support surface (22) and the third support surface (23).

2. Packaging system (1) according to claim 1, **characterised in that** the first support surface (20) is capable of cooperating by contact with a substantially central portion (141) of the top (140) of the blade (100), and **in that** the second support surface (22) and the third support surface (23) are capable of cooperating, respectively, with substantially extremal portion (151, 152) of the bottom (150) of said blade (100).

3. Packaging system (1) according to one of the claims 1 or 2, **characterised in that** the first support surface (21) is arranged substantially equidistant from the second support surface (22) and the third support surface (23).

4. Packaging system (1) according to any one of the claims from 1 to 3, **characterised in that** the first support surface (21) consists of a portion of the wall (11) which laterally delimits the housing (10).

5. Packaging system (1) according to any one of the claims from 1 to 4, **characterised in that** the blade (100) comprises a linking element (130) on the top (140) designed to allow it to be mounted on a driving mechanism, and **in that** the first support surface (21) is capable of cooperating by contact with said linking element (130).

6. Packaging system (1) according to any one of the claims from 1 to 5, **characterised in that** the second support surface (22) and the third support surface (23) are made up of portions of the same rim (12) arranged longitudinally at the bottom of the housing (10).

7. Packaging system (1) according to any one of the claims from 1 to 6, **characterised in that** the second support surface (22) and the third support surface (23) are capable of cooperating by contact with the heel (112) of the wiping strip (110).

8. Packaging system (1) according to any one of the claims from 1 to 7, **characterised in that** the second support surface (22) and the third support surface (23) are each capable of cooperating by contact with the flexible structure (120) formed integral with the heel (112) of the wiping strip (110).

9. Packaging system (1) according to any one of the claims from 1 to 8, **characterised in that** it comprises retaining means (30) capable of locking at least one part of the blade (100) inside the housing (10), in a direction substantially perpendicular to the sagittal plane of said blade (100).

10. Packaging system (1) according to claim 9, **characterised in that** the retaining means (30) are capable of flattening at least one part of the blade (100) against the bottom (13) of the housing (10).

11. Packaging system (1) according to one of the claims 9 or 10, **characterised in that** the retaining means (30) comprise a stop (31) arranged directly above the housing (10), which is capable of cooperating by contact with a portion of the lateral face of the blade (100).

12. Packaging system (1) according to any one of the claims from 1 to 11, **characterised in that** it comprises hooking means (40) which allow it to be hung in a position corresponding to a substantially vertical position of the blade (100).

13. Packaging system (1) according to any one of the claims from 1 to 12, **characterised in that** it comprises centring means (50) capable of locking the blade (100), longitudinally and in at least one direction, substantially at the centre of the housing.

14. Packaging system (1) according to claim 13, **characterised in that** the centring means (50) are capable of locking the blade (100) substantially at the centre of the housing (10) when said packaging system (1) is hung substantially vertically by means of its hooking means (40).

15. Packaging system (1) according to one of the claims 13 or 14, **characterised in that** the blade (100) comprises a linking element (130) on the top (140) designed to allow it to be mounted on a driving mechanism, and **in that** the centring means (50) comprise a stop (51) capable of cooperating by contact with said linking element (130).

16. Packaging system (1) according to any one of the claims from 1 to 15, **characterised in that** the housing (10) is delimited by a substantially rigid shell (14).

17. Packaging system (1) according to claim 16, **characterised in that** the shell (14) is light permeable.

18. Packaging system (1) according to any one of the claims from 1 to 17, **characterised in that** it comprises reinforcement means (60) capable of rigidifying the shell (14).

19. Packaging system (1) according to claim 18, **characterised in that** the reinforcement means (60) comprise a shoulder (61) arranged at the periphery of the opening of the housing (10) and which extends substantially perpendicular to the lateral wall (11) of the shell (14).

20. Packaging system (1) according to one of the claims 18 or 19, **characterised in that** the reinforcement means (60) comprise at least one rib (62a, 62b, 62c, 62d) arranged transversally to the bottom of the shell (14).

21. Packaging system (1) according to any one of the claims from 1 to 20, **characterised in that** it comprises a closing element capable of blocking the opening of the housing (10).

## Patentansprüche

1. Verpackungsvorrichtung (1) für einen Scheibenwischerarm (100) mit gekrümmtem Blatt (110) und integrierter flexibler Struktur (120), wobei die genannte Verpackungsvorrichtung (1) eine zur Aufnahme des Arms (100) bestimmte Aufnahme (10) umfasst, sowie zur Immobilisierung des genannten Arms (100) im Innern der genannten Aufnahme (10) einer Position bestimmte Haltemittel (20), die im Verhältnis zu ihrer Ruheposition wenigstens teilweise aufgerichtet werden kann, **dadurch gekennzeichnet, dass** die Haltemittel (20) eine erste Stützfläche (21) umfassen, die zum Zusammenwirken per Kontakt mit einem Abschnitt (141) des oberen Teils (140) des Arms (100) geeignet ist, eine zweite Stützfläche (22), die zum Zusammenwirken per Kontakt mit einem ersten Abschnitt (151) des unteren Abschnitts (150) des genannten Arms (100) geeignet ist, und eine dritte Stützfläche (23), die zum Zusammenwirken per Kontakt mit einem zweiten Abschnitt (152) des genannten unteren Teils (150) des Arms (100) geeignet ist, wobei sich die erste Stützfläche (21) gegenüber einer sich zwischen der zweiten Stützfläche (22) und der dritten Stützfläche (23) befindenden Zone erstreckt.

2. Verpackungsvorrichtung (1) gemäß Anspruch 1, **dadurch gekennzeichnet, dass** die erste Stützfläche (21) geeignet ist, per Kontakt mit einem deutlich zentralen Abschnitt (141) des oberen Teils (140) des Arms (100) zusammenzuwirken und dass die zweite Stützfläche (22) und die dritte Stützfläche (23) jeweils geeignet sind, per Kontakt mit Abschnitten (151, 152) zusammenzuwirken, die sich deutlich am Ende des unteren Abschnitts (150) des genannten Arms (100) befinden.

3. Verpackungsvorrichtung (1) gemäß Anspruch 1 oder 2, **dadurch gekennzeichnet, dass** die erste Stützfläche (21) deutlich in derselben Entfernung von der zweiten Stützfläche (22) und der dritten Stützfläche (23) angeordnet ist.

4. Verpackungsvorrichtung (1) gemäß Anspruch 1 bis 3, **dadurch gekennzeichnet, dass** die erste Stützfläche (21) durch einen die Aufnahme (10) lateral begrenzenden Wandabschnitt (11) gebildet wird.

5. Verpackungsvorrichtung (1) gemäß Anspruch 1 bis 4 **dadurch gekennzeichnet, dass** der Arm (100) an seinem oberen Ende (140) ein Verbindungselement (130) umfasst, das dazu bestimmt ist, seine Anbringung auf einem Antriebsmechanismus zu erlauben, dass die erste Stützfläche (21) geeignet ist, per Kontakt mit dem genannten Verbindungselement (130) zusammenzuwirken.

6. Verpackungsvorrichtung (1) gemäß Anspruch 1 bis 5, **dadurch gekennzeichnet, dass** die zweite Stützfläche (22) und die dritte Stützfläche (23) durch Abschnitte ein und derselben in Längsrichtung im Boden der Aufnahme (10) angeordneten Leiste (12) gebildet werden.

7. Verpackungsvorrichtung (1) gemäß Anspruch 1 bis 6, **dadurch gekennzeichnet, dass** die zweite Stützfläche (22) und die dritte Stützfläche (23) geeignet sind, per Kontakt mit dem Steg (112) des Blattes (110) zusammenzuwirken.

8. Verpackungsvorrichtung (1) gemäß Anspruch 1 bis 7, **dadurch gekennzeichnet, dass** die zweite Stützfläche (22) und die dritte Stützfläche (23) jeweils geeignet sind, per Kontakt mit der in den Steg (112) des Blattes (110) integrierten flexiblen Struktur (120) zusammenzuwirken.

9. Verpackungsvorrichtung (1) gemäß Anspruch 1 bis 8, **dadurch gekennzeichnet, dass** sie Rückhaltemittel (30) umfasst, die geeignet sind, wenigstens einen Teil des Arms (100) im Innern der Aufnahme (10) gemäß einer zur sagittalen Ebene des genannten Arms (100) deutlich senkrechten Richtung zu blockieren.

10. Verpackungsvorrichtung (1) gemäß Anspruch 9, **dadurch gekennzeichnet, dass** die Rückhaltemittel (30) geeignet sind, wenigstens einen Teil des Arms (100) gegen den Boden (13) der Aufnahme (10) zu drücken.

11. Verpackungsvorrichtung (1) gemäß Anspruch 9 oder 10, **dadurch gekennzeichnet, dass** die Rückhaltemittel (30) einen Anschlag (31) umfassen, der lotrecht zur Aufnahme (10) angeordnet ist und der geeignet ist, per Kontakt mit einem lateralen Seitenabschnitt des Arms (100) zusammenzuwirken.

12. Verpackungsvorrichtung (1) gemäß Anspruch 1 bis 11, **dadurch gekennzeichnet, dass** sie Befestigungsmittel (40) umfasst, die geeignet sind, seine Aufhängung in einer einer deutlich vertikalen Positionierung des Arms (100) entsprechenden Position zu erlauben.

13. Verpackungsvorrichtung (1) gemäß Anspruch 1 bis 12, **dadurch gekennzeichnet, dass** sie Zentrierungsmittel (50) umfasst, die geeignet sind, den Arm (100) in Längsrichtung und wenigstens in einer Richtung deutlich im Zentrum der Aufnahme (10) zu blockieren.

14. Verpackungsvorrichtung (1) gemäß Anspruch 13, **dadurch gekennzeichnet, dass** die Zentrierungsmittel (50) geeignet sind, den Arm (100) deutlich im Zentrum der Aufnahme (10) zu blockieren, wenn die genannte Verpackungsvorrichtung (1) deutlich vertikal durch ihre Befestigungsmittel (40) aufgehängt ist.

15. Verpackungseinheit (1) gemäß Anspruch 13 oder 14, **dadurch gekennzeichnet, dass** der Arm (100) an seinem oberen Ende (140) ein Verbindungselement umfasst, das dazu bestimmt ist, seine Anbringung auf einem Antriebsmechanismus zu erlauben, und dass die Zentrierungsmittel (50) einen Anschlag (51) umfassen, der zum Zusammenwirken per Kontakt mit dem genannten Verbindungselement (130) geeignet ist.

16. Verpackungselement (1) gemäß Anspruch 1 bis 15, **dadurch gekennzeichnet, dass** die Aufnahme (10) durch eine deutlich steife Schale (14) begrenzt wird.

17. Verpackungsvorrichtung (1) gemäß Anspruch 16, **dadurch gekennzeichnet, dass** die Schale (14) lichtdurchlässig ist.

18. Verpackungsvorrichtung (1) gemäß Anspruch 1 bis 17, **dadurch gekennzeichnet, dass** sie Verstärkungsmittel (60) umfasst, die zur Versteifung der Schale (14) geeignet sind.

19. Verpackungsvorrichtung (1) gemäß Anspruch 18, **dadurch gekennzeichnet, dass** die Verstärkungsmittel (60) einen Ansatz (61) umfassen, der an der Peripherie der Öffnung der Aufnahme (10) angeordnet ist und der sich deutlich senkrecht zur Seitenwand (11) der Schale (14) erstreckt.

20. Verpackungsvorrichtung (1) gemäß Anspruch 18 oder 19, **dadurch gekennzeichnet, dass** die Verstärkungsmittel (60) wenigstens eine transversal im Boden der Schale (14) angeordnete Rippung (62a, 62b, 62c, 62d) umfassen.

21. Verpackungsvorrichtung (1) gemäß Anspruch 1 bis 20, **dadurch gekennzeichnet, dass** sie ein Verschlusselement umfasst, das geeignet ist, die Öffnung der Aufnahme (10) zu verschließen.
